# EUROPEAN PATENT SPECIFICATION

(11) **EP 4 253 013 B1**
(45) Date of publication and mention of the grant of the patent: **29.07.2026**
(21) Application number: 23193523.0
(22) Date of filing: 07.10.2022
(51) Int. Cl.: B60B 1/00, B60B 5/02, B60B 21/02, B29C 70/34, B29K 311/10, B29L 31/32

(54) **NATURAL FIBER COMPOSITE BICYCLE COMPONENT**
FAHRRADKOMPONENTE AUS NATURFASERVERBUNDWERKSTOFF
COMPOSANT DE BICYCLETTE COMPOSITE EN FIBRE NATURELLE

(30) Priority: 12.10.2021 US 202163254585 P
(43) Date of publication of application: 04.10.2023
(62) Divisional of application: 22200408.7
(73) Proprietor: SRAM, LLC., Chicago, IL 60607 (US)
(72) Inventor: Trouw, Ruan, Mooresville, 46158 (US); Morse, David, Indianapolis, 46202 (US)
(74) Representative: Thum, Bernhard

(56) References cited:
- EP-A1- 2 648 890
- EP-A1- 3 290 227
- WO-A1-2017/001031
- WO-A1-2019/033169
- WO-A1-2019/113701
- WO-A1-2021/053142
- KR-B1- 102 018 195

## Description

### Background

### 1. Field of the Disclosure

The present disclosure is generally directed to composite bicycle rims.

### 2. Description of Related Art

A traditional bicycle wheel may include a rim formed of extruded metals or other materials that are bent and bonded into a circular shape having consistently shaped cross sections. Recently, other materials, such as fiber reinforced plastics, have been used in the manufacture of bicycle rims, which may be formed into circular shapes through non-extrusion based processes. Carbon fiber reinforced plastics may, for example, be used.

A method for manufacturing a fiber based (e.g., carbon fiber based) bike wheel relies on the stacking of individual sheets of carbon fiber material to form structures such as a side wall of the rim. The carbon fiber sheets may be pre-pregnated with a resin or other matrix material that undergoes a curing process to form the rim. The stacked layers of carbon fiber typically include fibers oriented in different directions, respectively.

Each of EP 3 290 227 A1, WO 2019 / 113 701 A1 and WO 2021 / 053 142 A1 discloses a rim for a bicycle wheel, wherein the rim comprises natural fiber based composite material.

### Summary

The invention relates to a rim for a bicycle wheel according to claim 1. The dependent claims relate to embodiments of the invention.

According to the invention, a rim for a bicycle wheel includes a radially inner portion disposed along an inner circumference of the rim, a first sidewall, and a second sidewall spaced apart from the first sidewall.
The first sidewall and the second sidewall extend radially outward from the radially inner portion. The rim also includes a radially outer tire engaging portion disposed along an outer circumference of the rim. The radially outer tire engaging portion extends from the first sidewall and the second sidewall, respectively. The first sidewall, the second sidewall, the radially outer tire engaging portion, the radially inner portion, or any combination thereof includes a composite laminate. The composite laminate includes one or more compressed layers of a composite material having a compressed thickness. The composite material includes a matrix of a polymer-based material and natural fibers for a reinforcing material.

In one embodiment, the compressed thickness is 75 percent or less of an original thickness of the one or more compressed layers of the composite material of the composite laminate.

In one embodiment, the reinforcing material has a specific modulus between 24 and 60 GPa/(g/cm³) and a specific strength below 600 MPa/(g/cm³).

In one embodiment, the reinforcing material has a cellulose content above 40% and a hemicellulose content above 4%.

In one embodiment, the polymer-based material is a thermoplastic, a thermoset matrix, or a combination thereof. The natural fibers of the reinforcing material are flax fibers, hemp fibers, kenaf fibers, jute fibers, sisal fibers, or any combination thereof.

In one embodiment, the one or more compressed layers of the composite material include strips of the composite material.

In one example, the natural fibers of each of the strips extend in any direction.

In one embodiment, fiber orientation of the natural fibers of the respective strip is unidirectional in a direction along a length of the respective strip.

According to the invention, the composite material is a first composite material, the polymer-based material is a first polymer-based material, and the reinforcing material is a first reinforcing material. The composite laminate includes one or more compressed layers of a second composite material. The second composite material includes a matrix of a second polymer-based material and natural fibers of a second reinforcing material.

In one embodiment, the second reinforcing material is the same as the first reinforcing material.

In one embodiment, the one or more compressed layers of the first composite material are closer to a surface of the composite laminate than the one or more compressed layers of the second composite material are relative to the surface of the composite laminate.

According to the invention, the composite laminate includes one or more layers of a third composite material, the third composite material including a matrix of a third polymer-based material and fibers of a third reinforcing material.

In one embodiment, the third polymer-based material is a plastic, an acrylic, a resin, an epoxy, or any combination thereof. The fibers of the third reinforcing material are carbon fibers.

In one embodiment, the one or more compressed layers of the second composite material are closer to the surface of the composite laminate than the one or more layers of the third composite material are relative to the surface of the composite laminate.

In one embodiment, the surface of the composite laminate is an outer surface of the first sidewall.

In one embodiment, the one or more first compressed layers and the one or more second compressed layers make up at least 5% of the composite laminate by volume.

In one embodiment, wherein the second reinforcing material is woven within the second polymer-based material.

In one embodiment, a rim for a bicycle wheel includes a radially inner portion disposed along an inner circumference of the rim, a first sidewall, and a second sidewall spaced apart from the first sidewall. The first sidewall and the second sidewall extend radially outward from the radially inner portion. The rim also includes a radially outer tire engaging portion disposed along an outer circumference of the rim, the radially outer tire engaging portion extending from the first sidewall and the second sidewall, respectively. The first sidewall, the second sidewall, the radially outer tire engaging portion, the radially inner portion, or any combination thereof includes a composite laminate. The composite laminate includes a layer of a composite material. The composite material includes a matrix of a polymer-based material and natural fibers of a reinforcing material. A volume of a respective one of the natural fibers of the layer of the composite material is greater before lamination of the composite laminate compared to the volume of the respective one natural fiber after the lamination of the composite laminate.

In one embodiment, the polymer-based material is a thermoplastic, a thermoset matrix, or a combination thereof. The natural fibers of the reinforcing material are flax fibers, hemp fibers, kenaf fibers, jute fibers, sisal fibers, or any combination thereof.

In one embodiment, the first sidewall includes the composite laminate. The first sidewall has an outer surface. The layer of the composite material forms a portion of the outer surface of the first sidewall.

According to the invention, the composite material is a first composite material, the polymer-based material is a first polymer-based material, and the reinforcing material is a first reinforcing material. The composite laminate further includes a layer of a second composite material. The second composite material includes a matrix of a second polymer-based material and natural fibers of a second reinforcing material.

According to the invention, the composite laminate further includes a layer of a third composite material. The third composite material including a matrix of a third polymer-based material and fibers of a third reinforcing material. The third reinforcing material is different than the first reinforcing material and the second reinforcing material.

In one embodiment, the layer of the second composite material is disposed between the layer of the first composite material and the layer of the third composite material.

In one example, a method of manufacturing a bicycle component includes positioning a layer of a first composite material within a mold. The first composite material includes a matrix of a first polymer-based material and natural fibers of a first reinforcing material. The method also includes positioning a layer of a second composite material within the mold, such that the layer of the second composite material abuts the layer of the first composite material, and forming the bicycle component. Forming the bicycle component includes forming a composite laminate that includes the layer of the first composite material and the layer of the second composite material within the mold. A volume of a respective one of the natural fibers of the first reinforcing material is greater before the forming of the composite laminate compared to the volume of the respective one natural fiber after the forming of the composite laminate.

In one example, forming the composite laminate includes press curing, autoclave curing, or oven curing the layer of the first composite material and the layer of the second composite material.

In one example, forming the composite laminate further includes shaping the composite laminate using a bladder.

In one example, the method further includes positioning a layer of a third composite material within the mold, such that the layer of the second composite material is disposed between the layer of the third composite material and the layer of the first composite material. Forming the composite laminate includes press curing, autoclave curing, or oven curing the layer of the first composite material, the layer of the second composite material, and the layer of the third composite material.

In one example, the first polymer-based material is a thermoplastic, a thermoset matrix, or a combination thereof, and the fibers of the first reinforcing material are flax fibers, hemp fibers, kenaf fibers, jute fibers, sisal fibers, or any combination thereof. The third polymer-based material is a plastic, an acrylic, a resin, an epoxy, or any combination thereof, and the fibers of the third reinforcing material are carbon fibers.

In one example, the bicycle component is a rim.

In one example, the layer of the first composite material partially forms an outer surface of a sidewall of the rim, a radially inner portion of the rim, or a radially outer tire engaging portion of the rim.

In one example, the second composite material is the same as the first composite material. Positioning the layer of the second composite material within the mold includes positioning the layer of the second composite material within the mold, such that a portion of the layer of the second composite material overlaps a portion of the layer of the first composite material. The layer of the first composite material and the layer of the second composite material partially form an outer surface of the bicycle component.

In one example, the second composite material includes a matrix of a second polymer-based material and natural fibers of a second reinforcing material. Fiber orientation of the natural fibers of the first reinforcing material of the layer of the first composite material is unidirectional in a direction along a length of the respective layer. The second reinforcing material is woven within the second polymer-based material.

In one example, the layer of the second composite material is thicker than the layer of the first composite material.

### Brief Description of the Drawings

Objects, features, and advantages of the present invention will become apparent upon reading the following description in conjunction with the drawing figures, in which
FIG. 1 is a side view schematic of a bicycle that may be constructed to utilize a composite rim;
FIG. 2 is a side view of a wheel for a bicycle, such as the bicycle of FIG. 1;
FIG. 3 is a cross-section of an uncured composite rim formed by layers of composite material;
FIG. 4 is a chart of specific modulus for a number of natural fibers compared to other materials used to manufacture bicycle parts;
FIG. 5 is a chart of specific ultimate strength for the number of natural fibers and other materials of FIG. 4;
FIG. 6 is a chart of density for the number of natural fibers and other materials of FIG. 4;
FIG. 7 is a top view of a first type of strip that may be used in the layup of FIG. 3;
FIG. 8 is a top view of second type of strip that may be used in the layup of FIG. 3;
FIG. 9 is a flow chart of an embodiment of a method for manufacturing a rim;
FIG. 10 illustrates a change of thickness of a carbon laminate before and after curing;
FIG. 11 illustrates a change in thickness of a flax laminate before and after curing;
FIG. 12 illustrates an additional layer in the layup of strips.

### Detailed Description of the Disclosure

The use of sheets or strips of carbon fiber to manufacture a composite rim of the prior art provides a number of advantages compared to traditional bicycle rims formed of extruded metals or other materials. For example, carbon fiber based bicycle rims have a high tensile strength, a low weight, a high temperature tolerance, and a low thermal expansion compared to traditional bicycle rims.

Carbon fiber composite bicycle parts, however, have a high specific stiffness, which is unfavorable for a rider of a bicycle in certain applications. This may result in undesirable locomotive energy losses due to vibrations transmitted from road asperities through components of the bicycle, to the rider. This may lead to physiological fatigue and compensation by the rider. Carbon is also an electrical conductor that may shield wireless signals used by electronic components of the bicycle. Carbon fibers may thus act as a Faraday cage that blocks wireless signals.

Other non-traditional materials and/or composites may be used for bicycle parts. For example, fiberglass composite bicycle parts may result in favorable stiffness characteristics but may come with a significant weight and strength penalty. As another example, conventional wood bicycle parts are not suited to constructions utilizing thin-walled laminates with multiple fiber orientations. This inability to use multiple fiber orientations in a thin-walled section prohibits the manufacture of structures optimized to a specific stiffness such as box sections. As yet another example, wood laminate, as used for a bicycle part, utilizes layers over 1 mm thick, which limits the number of layers that may be used for a given part thickness. This limits a directional strength of the bicycle part since each layer may have fibers in a single main direction. As another example, bamboo tubes, as used for a bicycle part, has a same disadvantage as wood because of fiber directionality. Bamboo tubes may be functional for bicycle parts such as frame tubes but remain sub-optimized without the ability to take advantage of multiple fiber directions. As yet another example, bicycle parts made from high tenacity fibers such as polypropylene may be too flexible to support intended design loads and allowable displacements.

The present disclosure provides examples of bicycle parts, such as rims and wheels, made of thin ply low density cellulose composites that solve or improve upon one or more of the above-noted and/or other disadvantages with bicycle parts made of carbon fiber composite or other non-traditional materials. The disclosed rims, for example, made of such thin ply low density cellulose composites provide superior vibration damping, sound attenuation, and more ductile failures, while keeping a unique balance between stiffness, weight, and processability. The disclosed rims, for example, may also be non-electrically conductive, allowing wireless signals to pass through.

The specific stiffness of cellulose fibers may range between that of high tenacity fibers such as ultra high molecular weight polyethylene and very stiff and strong fibers such as carbon fibers. Cellulose fibers may also have a specific strength lower than that of fiberglass.

A cellulose fiber composite may be processed in layers thinner than 0.25 mm, giving the cellulose fiber composite the ability to be processed in a same way as standard composites for bicycle part manufacturing, and may be tailored for specific load paths. The ability to be processed like carbon fiber composites provides that the cellulose fiber composite may also be used in a hybrid layup with carbon and/or other engineered fibers.

Common manufacturing processes used for manufacturing carbon composite bicycle parts such as rims, for example, may be used to manufacture cellulose fiber composite bicycle parts. For example, manufacturing processes such as press curing, autoclave curing, oven curing, and/or resin transfer molding may be used. The cellulose fiber composite bicycle parts may also be shaped using, for example, a bladder or a material that applies pressure to a laminate due to heat growth (e.g., silicone in a constricted mold tool).

A number of different laminates (e.g., including a number of layers) and fiber sets may be used for bicycle parts. For example, a first laminate may include fibers of a first fiber type (e.g., only one fiber type; hemp) that has both a specific modulus of 24-60 GPa/(g/cm³) and a specific strength below 600 MPa/(g/cm³). A second laminate may have the fibers of the first fiber type or fibers of a second fiber type (e.g., flax) having a cellulose content above 40% and a hemicellulose content above 4% of the fiber makeup. The fibers of the first fiber type and the fibers of the second fiber type may be encapsulated by a thermoplastic or a thermoset matrix.

A third laminate (e.g., including carbon and/or other fibers) may be used with the first laminate and/or the second laminate (e.g., between 5% and 100% by volume) to form a bicycle part. The third laminate may make up, for example, up to 95% of the bicycle part by volume. Other laminates and other combinations of laminates may be provided.

The disclosed cellulose fiber composites have an advantageous combination of low material density, an appropriate range of signal stiffness, and signal transmissivity. An advantage of using a disclosed cellulose fiber composite for a bicycle part is that a weight of the bicycle part may be reduced for structures that are not heavily dependent on specific fiber tensile strength. Another advantage is an increase in vibration damping in bicycle parts, which reduces locomotive energy losses while increasing comfort and control. Other advantages are a reduction in noise from the bicycle parts due to an increase in sound attenuation, and more ductile failure responses being created, which leads to less catastrophic failures often associated with carbon composites.

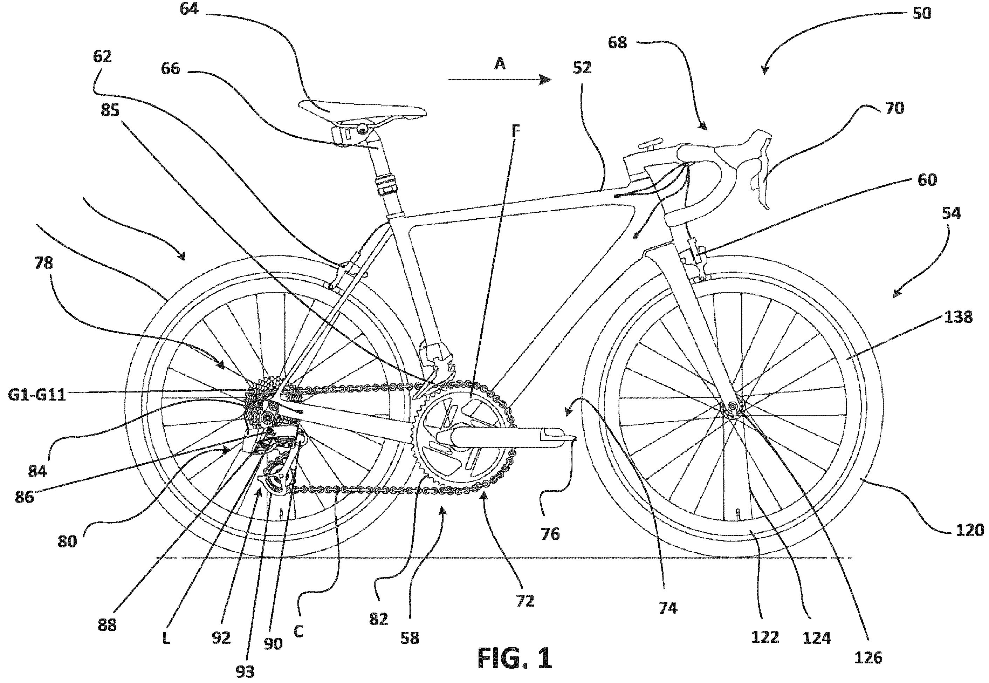

Turning now to the drawings, FIG. 1 generally illustrates a bicycle 50 that employs rims constructed in accordance with the teachings of the present disclosure. The bicycle 50 includes a frame 52, a front wheel 54 and a rear wheel 56 each rotatably attached to the frame 52, and a drivetrain 58. A front brake 60 is provided for braking the front wheel 54, and a rear brake 62 is provided for braking the rear wheel 56. The bicycle 50 also generally has a seat 64 near a rear end of the frame 52 and carried on an end of a seat post 66 connected to the frame 52. The bicycle 50 also has handlebars 68 near a forward end of the frame 52. A brake lever 70 is carried on the handlebars 68 for actuating the front brake 60, the rear brake 62, or both the front brake 60 and the rear brake 62. If the brake lever 70 actuates only one of the front brake 60 and the rear brake 62, a second brake lever (not shown) may also be provided to actuate the other brake. A front and/or forward riding direction or orientation of the bicycle 50 is indicated by the direction of the arrow A in FIG. 1. As such, a forward direction for the bicycle 50 is indicated by the direction of arrow A. While the illustrated bicycle 50 depicted in FIG. 1 is a road bike having drop-style handlebars 68, the present disclosure may be applicable to bicycles of any type, including mountain bikes with full or partial suspensions.

The drivetrain 58 has a chain C and a front sprocket assembly 72, which is coaxially mounted with a crank assembly 74 having pedals 76. The drivetrain 58 also includes a rear sprocket assembly 78 coaxially mounted with the rear wheel 56 and a rear gear change mechanism, such as a rear derailleur 80.

As is illustrated in FIG. 1, the front sprocket assembly 72 may include one or more coaxially mounted chainrings, gears, or sprockets. In this example, the front sprocket assembly 72 has one sprocket F. The one sprocket F has teeth 82 around a respective circumference. As shown in FIG. 1, the rear sprocket assembly 78 may include a plurality of coaxially mounted gears, cogs, or sprockets G. Each sprocket G1-G11 also has teeth 84 arranged around a respective circumference. The number of teeth 84 on the rear sprockets G1-G11 may gradually decrease from the largest diameter rear sprocket G1 to the smallest diameter sprocket G11. Though not described in any detail herein, a front gear changer 85 may be operated to move from a first operating position to a second operating position to move the chain C between front sprockets F. Likewise, the rear derailleur 80 may be operable to move between different operating positions to switch the chain C to a selected one of the rear sprockets G1-G11. In an embodiment, the rear sprocket assembly 78 may have more or fewer sprockets G. For example, in an embodiment, the rear sprocket assembly 78 may have twelve or thirteen sprockets. Dimensions and configuration of the rear derailleur 80 may be modified to accommodate a specific implemented plurality of sprockets. For example, an angle and length of the linkage and/or the configuration of the cage of the derailleur may be modified to accommodate specific sprocket combinations.

The rear derailleur 80 is depicted as a wireless, electrically actuated rear derailleur mounted or mountable to the frame 52, or frame attachment, of the bicycle 50. The electric rear derailleur 80 has a base member 86 (e.g., a b-knuckle) that is mounted to the bicycle frame 52. A linkage 88 has two links L that are pivotally connected to the base member 86 at a base member linkage connection portion. A movable member 90 (e.g., a p-knuckle) is connected to the linkage 88 at a moveable member linkage connection portion. A chain guide assembly 92 (e.g., a cage) is configured to engage and maintain tension in the chain and has one or more cage plates 93 with a proximal end that is pivotally connected to a part of the movable member 90. The cage plate 93 may rotate or pivot about a cage rotation axis in a damping direction and a chain tensioning direction. Other gear changing systems, such as mechanically or hydraulically controlled and/or actuated systems may also be used.

A motor module may be carried on the electric rear derailleur 80 with a battery. The battery supplies power to the motor module. In one example, the motor module is located in the movable member 90. However, the motor module may instead be located elsewhere, such as in one of the links L of the linkage 88 or in the base member 86. The motor module may include a gear mechanism or transmission. As is known in the art, the motor module and gear mechanism may be coupled with the linkage 88 to laterally move the cage plate 93 and thus switch the chain C among the rear sprockets (e.g., G1-G11) on the rear sprocket assembly 78.

The cage plate 93 also has a distal end that carries a tensioner cog or wheel. The wheel also has teeth around a circumference. The cage plate 93 is biased in a chain tensioning direction to maintain tension in the chain C. The chain guide assembly 92 may also include a second cog or wheel, such as a guide wheel disposed nearer the proximal end of the cage plate 93 and the movable member 90. In operation, the chain C is routed around one of the rear sprockets (e.g., G1-G11). An upper segment of the chain C extends forward to the front sprocket assembly 72 and is routed around the one front sprocket F. A lower segment of the chain C returns from the front sprocket assembly 72 to the tensioner wheel and is then routed forward to the guide wheel. The guide wheel directs the chain C to the rear sprockets (e.g., G1-G11). Lateral movement of the cage plate 93, the tensioner wheel, and the guide wheel may determine the lateral position of the chain C for alignment with a selected one of the rear sprockets (e.g., G1-G11).

The bicycle 50 may include one or more bicycle control devices mounted to handlebars 68. The bicycle control devices may include one or more types of bicycle control and/or actuation systems. For example, the bicycle control devices may include brake actuation systems to control the front brake 60 and/or the rear brake 62, and/or gear shifting systems to control the drivetrain 58. Other control systems may also be included. For example, the system may be applied, in some embodiments, to a bicycle where only a front or only a rear gear changer is used. Also, the one or more bicycle control devices 100 may also include suspension, seat post, and/or other control systems for the bicycle 50.

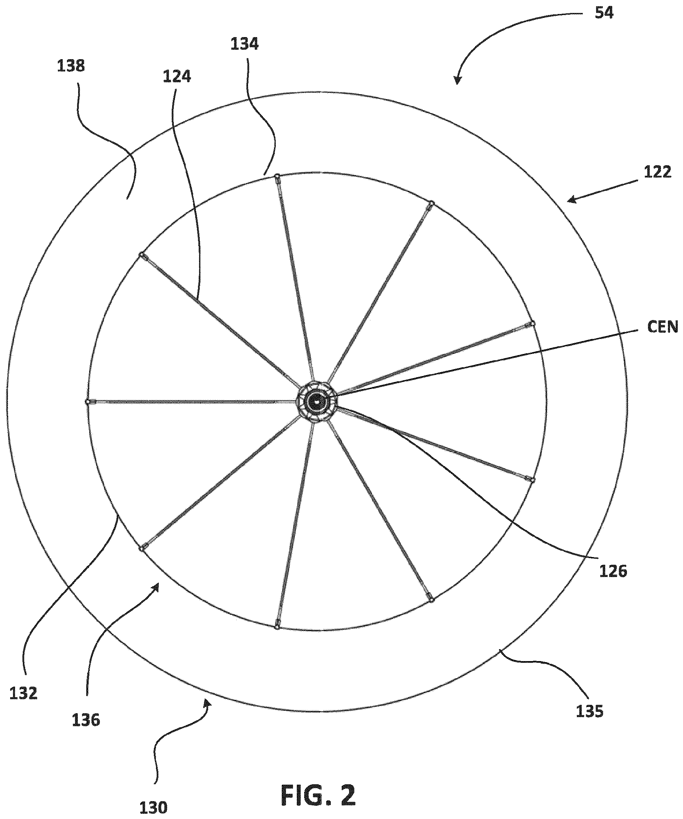

The front wheel 54 and/or the rear wheel 56 of the bicycle 50 may include a tire 120 attached to a radially outer tire engaging portion of a rim 122. As shown in FIGS. 1 and 2, a plurality of spokes 124 are attached directly to the rim 122. Alternatively, the spokes 124 may be attached and/or secured to the rim 122 with other structural components. The spokes 124 extend from the rim 122 and attach to a central hub 126. The spokes 124 are maintained with a tension between the rim 122 and the central hub 126 to provide the respective wheel 54, 56 with an operational rigidity for use on the bicycle 50. The central hub 126 is configured for rotational attachment to the bicycle frame 52.

FIG. 2 illustrates a bicycle wheel having a rim 122, spokes 124, and a central hub 126, such as the front wheel 54 of FIG. 1, removed from the rest of the bicycle 50 and without a tire attached. The rim 122 includes a tire engaging portion 130 to engage with the tire 120, as is shown in FIG. 1. The tire engaging portion 130 is configured radially outward of a spoke receiving surface 132 that is disposed along an inner circumference 134 of the rim 122. In other words, the tire engaging portion 130 is a radially outer tire engaging portion. In an embodiment, the tire engaging portion 130 is disposed along an outer circumference 135 of the rim 122. The tire engaging portion 130 is configured for attachment to tires using clincher tire attachment configurations for tires including beaded interlock attachments. Other configurations of the tire engaging portion 130 may also be provided to allow for the use of other types of tires on the rim 122. For example, tubeless tires including beaded interlock attachment types may be used.

The rim 122 provides structure for attachment of the spokes 124 to the rim 122 at a receiving portion of the rim 122, proximate to the spoke receiving surface 132. As such, the spoke receiving surface 132 is part of a spoke engaging portion 136 (e.g., a radially inner portion) of the rim 122. In an embodiment, the spoke engaging portion 136 of the rim 122 is disposed along the inner circumference 134 of the rim 122. In another embodiment, the spoke receiving surface 132 and the spoke engaging portion 136 may be separate parts and/or portions of the rim 122. For example, the spokes 124 may pass through the spoke receiving surface 132, and the structure for attachment to the rim 122 may be provided proximate to the tire engaging portion 130.

The rim 122 includes a first sidewall 138 and a second sidewall that extend between the tire engaging portion 130 and the spoke engaging portion 136. For example, the first sidewall 138 and the second sidewall extend radially outward from the spoke engaging portion 136 to the tire engaging portion 130. The first sidewall 138 is spaced apart from the second sidewall.

At least part of the rim 122 (e.g., the first sidewall 138 and the second sidewall) is formed by one or more composite materials. In one embodiment, the entire rim 122 is formed by one or more composite materials. In one example, natural fiber reinforced plastic forms a one-piece unitary rim of a collection of natural fiber layers including the tire engaging portion 130, the first sidewall 138, the second sidewall, and the spoke engaging portion 136. Other configurations may also be provided. For example, a combination of natural fiber reinforced plastic and carbon-fiber reinforced plastic forms a one-piece unitary rim of a collection of natural fiber layers and carbon-fiber layers including the tire engaging portion 130, the first sidewall 138, the second sidewall, and the spoke engaging portion 136. Other configurations may also be provided.

The front wheel 54 and the rear wheel 56 may include rims 122 configured for any size wheel. In an embodiment, the rims 122 are configured for use in wheels conforming to a 700C (e.g., a 622 millimeter diameter clincher and/or International Standards Organization 622mm) bicycle wheel standard.

The front wheel 54 and the rear wheel 56 may rotate about the central hub 126 in either direction. For example, as shown in FIG. 2, the front wheel 54 and the rear wheel 56 may be configured to rotate in a particular rotational direction about the central hub 126. In another example, the front wheel 54 and the rear wheel 56 may be configured to rotate in a direction opposite the particular rotational direction.

In one embodiment, the first sidewall 138, the second sidewall, the spoke engaging portion 136, and the tire engaging portion 130 of the front wheel 54 and/or the rear wheel 56 of the bicycle 50 (e.g., the front wheel 54 and the rear wheel 56 in the example of FIG. 1) are at least partially formed by one or more layers of the one or more composite materials (e.g., layers of composite materials). Each of the one or more layers may include one or more fabric plies (e.g., pieces) of the respective composite material. Different layers of different composite materials may include different numbers of plies or pieces of the composite materials, respectively. At least some of the layers of composite material may be of different shapes and/or sizes. Alternatively, all of the layers of the composite material may be a same shape and/or size.

In one embodiment, at least some of the layers of composite material are shaped as strips. For example, strips of the one or more composite materials may form the first sidewall 138 and the second sidewall of the front wheel 54. The strips of the one or more composite materials may be disposed about the central hub 126 of the front wheel 54, respectively, and the central hub 126 of the rear wheel 56, respectively, to form the first sidewall 138 and the second sidewall of the front wheel 54 and the rear wheel 56, respectively.

In a manufacturing process, the layers of the front wheel 54 and the rear wheel 56, respectively, are integrated with the spoke engaging portion 136 and the tire engaging portion 130 (e.g., layers of composite material forming the spoke engaging portion 136 and the tire engaging portion 130) of the respective wheel 54, 56 by, for example, a curing process, such that a one-piece unitary rim 122 is formed. The rims 122 of the front wheel 54 and rear wheel 56, respectively, may be formed with other manufacturing processes.

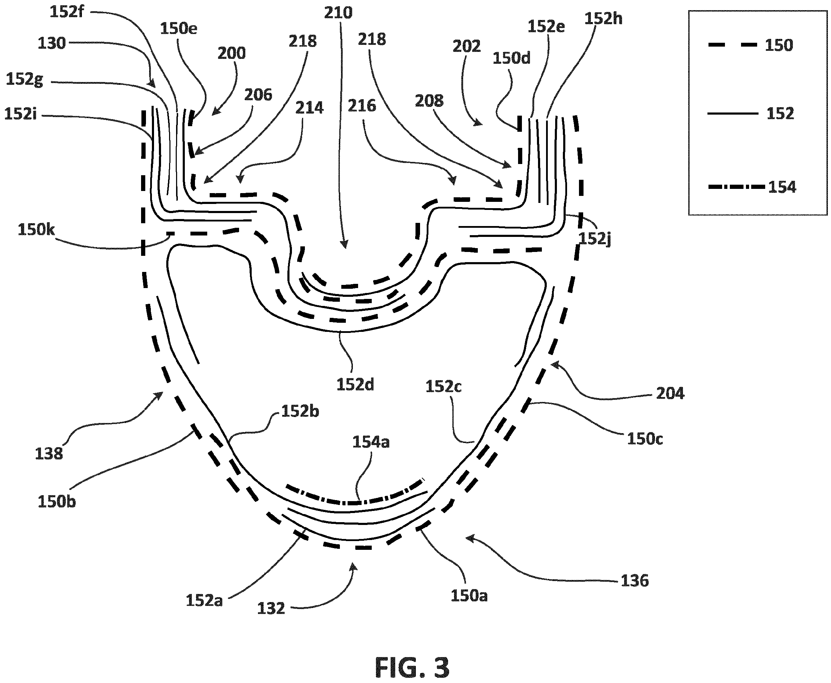

FIG. 3 illustrates one embodiment of a layup pattern of layers of composite material (e.g., first layers 150, second layers 152, and third layers 154) for the rim 122 prior to the curing process. The first layers 150, the second layers 152, and the third layers 154, for example, after the curing process, may be part of a one-piece unitary rim 122. The resultant one-piece unitary rim 122 may be formed by a composite laminate that includes one or more compressed layers of one or more composite materials. Any number of composite materials may be included within the composite laminate. For example, the one or more composite materials of the composite laminate may include a first composite material, a second composite material, a third composite material, or any combination thereof. The composite laminate may include more or fewer composite materials. For example, the composite laminate may include only the first composite material or only the second composite material.

The first composite material may include a matrix of a first polymer-based material and natural fibers of a first reinforcing material. In one example, the first reinforcing material has a specific modulus between 24 and 60 GPa/(g/cm³) and a specific strength below 600 MPa/(g/cm³). Alternatively or additionally, the first reinforcing material may have a cellulose content above 40% and a hemicellulose content above 4%. The first polymer-based material may be any number of materials including, for example, a thermoplastic, a thermoset matrix, another polymer-based material, or any combination thereof, and the natural fibers of the first reinforcing material may be any number of materials including, for example, flax fibers, kenaf fibers, hemp fibers, jute fibers, sisal fibers, one or more other natural fibers, or any combination thereof.

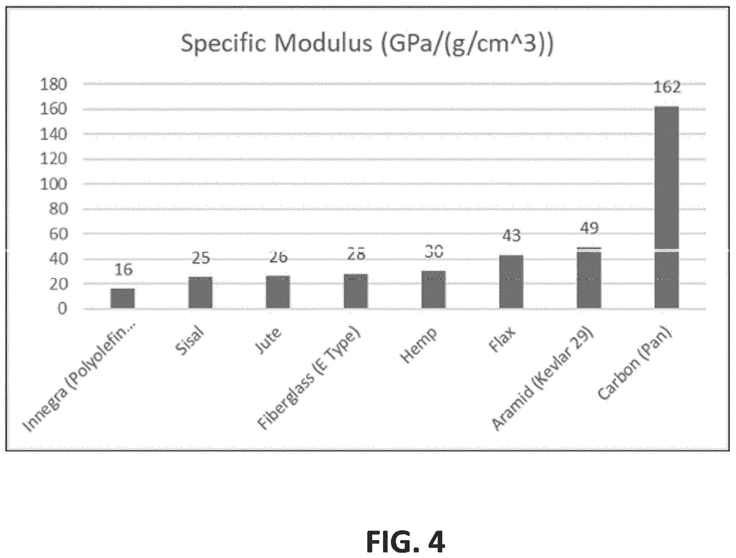

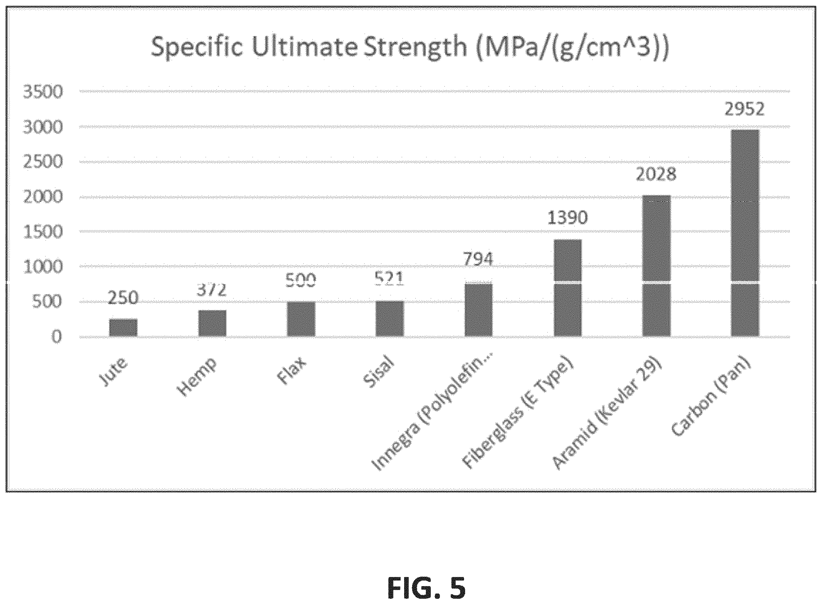

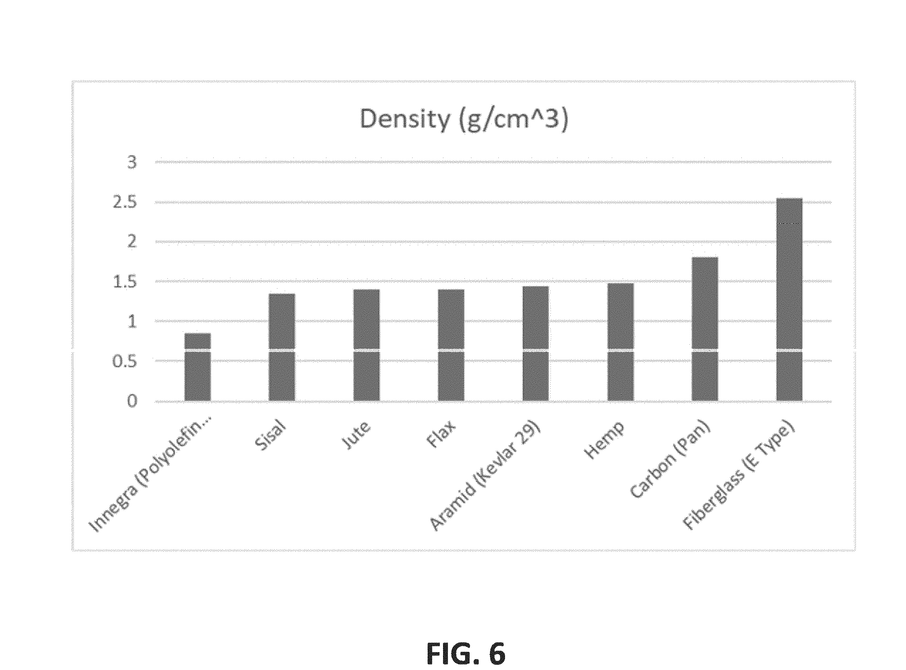

Referring to FIGS. 4-6, a number of natural fibers provide a combination of low material density (e.g., compared to fiberglass) with a sufficient range of specific stiffness for a number of different types of bicycle components (e.g., bicycle rims, crankarms, handlebars, stems, seat posts, seat rails, shifting levers, brake levers, derailleur cages, suspension fork components). For example, flax has a density of less than 1.5 g/cm³ (e.g., compared to a density of more than 2.5 g/cm³ for fiberglass), a specific modulus of 43 GPa/(g/cm³) (e.g., compared to 28 GPa/(g/cm³) for fiberglass), and a specific ultimate strength of 500 MPa/(g/cm³) (e.g., compared to 1,390 MPa/(g/cm³) for fiberglass). As another example, hemp has a density of less than 1.5 g/cm³, a specific modulus of 30 GPa/(g/cm³), and a specific ultimate strength of 372 MPa/(g/cm³). As yet another example, sisal has a density of less than 1.5 g/cm³, a specific modulus of 25 GPa/(g/cm³), and a specific ultimate strength of 521 MPa/(g/cm³). Other natural fibers may be used. The combination of a cellulose structure with unique specific stiffness properties, specific modulus properties, and processability characteristics damp vibrations, increase sound attenuation, and provide for a more ductile failure compared to composites used in the prior art (e.g., fiberglass). Low-density cellulose composites (e.g., flax fiber composites) are non-conductive, which allow for electrical signals to pass through the composite, unlike carbon fiber composites, which act as a Faraday cage blocking signals.

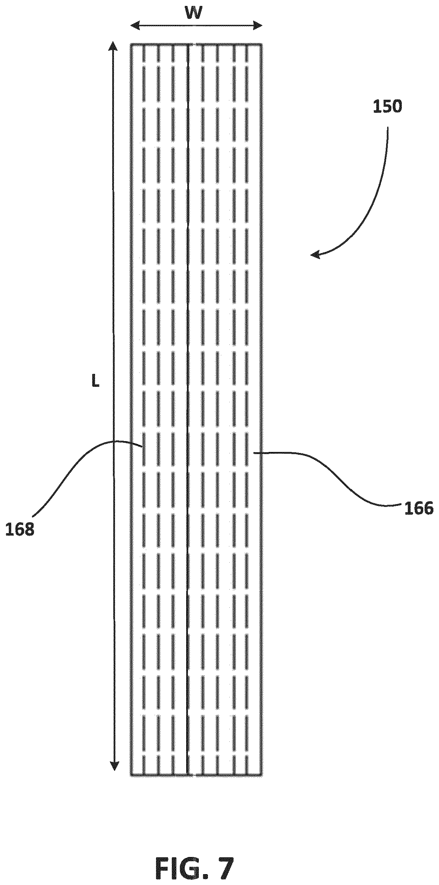

The first layers 150 may be made of the first composite material. FIG. 7 illustrates one embodiment of a layer 150 of the first composite material shaped as a strip. The first composite material includes a matrix 166 of a polymer-based material (e.g., the first polymer-based material) and fibers 168 of a reinforcing material (e.g., the first reinforcing material). In one embodiment, the first polymer-based material is, for example, a thermoplastic or a thermoset. In one embodiment, fibers of the first reinforcing material are, for example, flax fibers. Other polymer-based materials and/or other reinforcing fibers may be used.

The fibers 168 extend along a finite length L of the strip 150. In one embodiment, the fibers 168 extend in a primary strength direction of the strip 150 (e.g., along the length L of the strip 150). For example, the strip 150 has unidirectional fiber orientation along the length L. In another embodiment, some of the fibers 168 do not extend in the primary strength direction (e.g., less than 20 percent of the fibers, less than 10 percent of the fibers, or less than 5 percent of the fibers). The strip 150 may be any number of shapes and/or sizes. For example, the strip 150 is rectangular in shape. Other shapes such as, for example, square shaped strips and non-rectangular parallelogram shaped strips, may be provided. The strip 150 also includes a width W that is perpendicular to the length L. The length L may be defined by a size of, for example, the tire engaging portion 130, the first sidewall 138, the second sidewall, and/or the spoke engaging portion 136 of the rim 122. In other words, the length L may be at least as tall or wide as the tire engaging portion 130, the first sidewall 138, the second sidewall, and/or the spoke engaging portion 136 of the rim 122. In one embodiment, the width W of the strip 150 is between 10 mm and 50 mm. For example, the width W of the strip 150 is 30 mm. In other embodiments, the strip 150 is wider or narrower (e.g., 60 mm). Smaller strip widths better optimize fiber orientation but come with a cost of added manufacturing complexity. In one embodiment, the width W of the strip 150 is as wide as a radial width of the rim 122.

Layers 150 of different shapes, greater width, and/or greater length may be used. For example, at least some of the layers of composite material may extend a quarter, half, or all the way around the rim (e.g., as a support within a well of the rim 122). Different sized and/or shaped layers of composite material may be used depending on the application within the rim (e.g., forming an outer surface, providing strength and stiffness at a high load location within the rim).

The layer 150 of the first composite material may have any number of thicknesses. For example, the thickness of the layer 150 of the first composite material may be 0.4 mm or thinner (e.g., 0.25 mm or thinner). Other thicknesses of the layer 150 of the first composite material may be provided.

The layers 150, for example, provide ultimate strength in a direction of fiber grain. Accordingly, fiber alignment relative to an inner diameter of the rim 122 may be provided for increasing strength of the rim 122. The width W of the layer 150 is a variable in maximizing fiber alignment relative to a prescribed orientation. The further the fibers are from the center CEN of the rim 122, the more the angle of the fiber relative to the rim tangent changes, which reduces the ability of the fiber to support stresses and load.

The second composite material may include a matrix of a second polymer-based material and natural fibers of a second reinforcing material. In one example, the second reinforcing material has a specific modulus between 24 and 60 GPa/(g/cm³) and a specific strength below 600 MPa/(g/cm³). Alternatively or additionally, the second reinforcing material may have a cellulose content above 40% and a hemicellulose content above 4%. The second polymer-based material may be any number of materials including, for example, a resin, an epoxy, or a combination thereof, and the natural fibers of the reinforcing material may be any number of materials including, for example, flax fibers, kenaf fibers, hemp fibers, jute fibers, sisal fibers, one or more other natural fibers, or any combination thereof. In one embodiment, the second reinforcing material is the same as the first reinforcing material (e.g., flax).

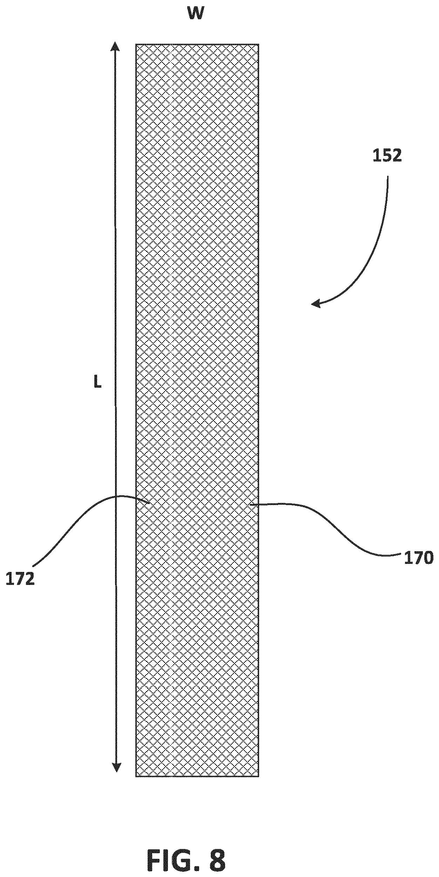

The second layers 152 may be made of the second composite material. FIG. 8 illustrates one embodiment of a layer 152 of the second composite material formed as a strip. The second composite material includes a matrix 170 of a polymer-based material (e.g., the second polymer-based material) and fibers 172 of a reinforcing material (e.g., the second reinforcing material). In one embodiment, the second polymer-based material is a resin, and the fibers of the second reinforcing material are flax fibers.

The fibers 172 are woven within the matrix 170 of the polymer-based material of the strip 152. Accordingly, at least some of the fibers 172 are at angles relative to others of the fibers 172. For example, at least some of the fibers 172 form a checkered pattern. In one embodiment, at least some of the fibers 172 extend along a length L of the strip 152. For example, less than 20 percent of the fibers 172, less than 10 percent of the fibers 172, or less than 5 percent of the fibers 172 extend along the length L of the strip 152. In an alternate embodiment, the fibers 172 of strip 152 may be oriented in any direction. When flax is used as a low-density filler, the orientation of the fibers may be less significant. The fibers may not be oriented in the primary direction of the strip. In another alternate embodiment, the fibers may be aligned with a load path that is different than the orientation of the strip.

The strip 152 may be any number of shapes and/or sizes. For example, the strip 152 is rectangular in shape. Other shapes such as, for example, square shaped strips and non-rectangular parallelogram shaped strips, may be provided. The strip 152 also includes a width W that is perpendicular to the length L. The length L may be defined by a size of, for example, the tire engaging portion 130, the first sidewall 138, the second sidewall, and/or the spoke engaging portion 136 of the rim 122. In other words, the length L may be at least as tall or wide as the tire engaging portion 130, the first sidewall 138, the second sidewall, and/or the spoke engaging portion 136 of the rim 122. In one embodiment, the width W of the strip 152 is between 10 mm and 50 mm. For example, the width W of the strip 152 is 30 mm. In other embodiments, the strip 152 is wider or narrower (e.g., 60 mm). In one embodiment, the width W of the strip 152 is as wide as a radial width of the rim 122.

Layers 152 of different shapes, greater width, and/or greater length may be used. For example, at least some of the layers 152 of the second composite material may extend a quarter, half, or all the way around the rim (e.g., as a support within a well of the rim 122). Different sized and/or shaped layers 152 of the second composite material may be used depending on the application within the rim (e.g., providing thickness and stiffness at a high load location within the rim 122).

The layer 152 of the second composite material may have any number of thicknesses. In one embodiment, the layer 152 includes a number of plies of material and is thicker than the layer 150 of the first composite material. Each of the number of plies of material of the layer 152 may be unidirectional and may be stacked and sewn together, such that a checkered or hash pattern is formed. In other words, at least some of the number of plies of material of the layer 152 are unidirectional in different directions, respectively. For example, the thickness of the layer 152 of the second composite material may be 1.2 mm or thicker. Other thicknesses of the layer 152 of the second composite material may be provided.

The third layers 154 may be made of the third composite material. In one embodiment, a layer 154 of the third composite material is shaped as a strip. The third strip 154 may be similar to the strip 150 of the first composite material shown in FIG. 7. For example, the third composite material also includes a matrix of a polymer-based material (e.g., the third polymer-based material) and fibers of a reinforcing material (e.g., the third reinforcing material). The third polymer-based material may be any number of materials including, for example, a plastic, an acrylic, a resin, an epoxy, or any combination thereof, and the fibers of the third reinforcing material may be any number of materials including, for example, carbon. Other polymer-based materials and/or other reinforcing fibers may be used.

The third reinforcing material may be denser and may have a greater specific modulus and specific ultimate strength compared to the first reinforcing material and the second reinforcing material. For example, carbon has a density of, for example, more than 2.5 g/cm³, but a specific modulus of 162 GPa/(g/cm³) and a specific strength of 2,952 MPa/(g/cm³). While carbon is heavier than the first reinforcing material and the second reinforcing material, carbon and/or other denser but stronger reinforcing materials may be used sparingly to reinforce particular areas of the rim (e.g., the spoke engaging portion 136 of the rim 122).

Like the fibers 168 shown in FIG. 7, the fibers of the third reinforcing material may extend along a finite length of the strip 154. In one embodiment, the fibers extend in a primary strength direction of the strip 154. For example, the strip 154 has unidirectional fiber orientation along the length of the strip 154. In another embodiment, some of the fibers of the third reinforcing material do not extend in the primary strength direction (e.g., less than 20 percent of the fibers, less than 10 percent of the fibers, or less than 5 percent of the fibers). The strip 154 may be any number of shapes and/or sizes. For example, the strip 154 is rectangular in shape. Other shapes such as, for example, square shaped strips and non-rectangular parallelogram shaped strips, may be provided. The strip 154 also includes a width that is perpendicular to the length L. The width W may be defined by a size of, for example, the spoke engaging portion 136 of the rim 122. In one embodiment, the width W of the strip 154 is between 10 mm and 50 mm. For example, the width W of the strip 154 is 30 mm. In other embodiments, the strip 154 is wider or narrower. The strip 154 of the third composite material may have any number of thicknesses.

Layers 154 of different shapes, greater width, and/or greater length may be used. For example, at least some of the layers 154 of the third composite material may extend a quarter, half, or all the way around the rim 122 (e.g., as a support within a well of the rim 122). Different sized and/or shaped layers 154 of the third composite material may be used depending on the application within the rim (e.g., providing strength and stiffness at a high load location within the rim).

Referring to FIG. 3, the radially outer tire engaging portion 130 includes a first tire retaining portion 200 and a second tire retaining portion 202 spaced apart from the first tire retaining portion 200. The first tire retaining portion 200 extends from the first sidewall 138, and the second tire retaining portion 202 extends from a second sidewall 204. The first sidewall 138 and the second sidewall 204 extend radially inward from the radially outer tire engaging portion 130.

The first tire retaining portion 200 includes a first tire retaining wall 206. In one embodiment, the first tire retaining portion 200 also includes a first protrusion (e.g., a first tire retaining feature) (not shown). The first protrusion may extend away from the first tire retaining wall 206. The first protrusion may be any number of shapes including, for example, a shape having a cross-section that is rectangular with a semi-circle cap. The first protrusion may extend circumferentially around the rim 122.

The second tire retaining portion 202 includes a second tire retaining wall 208. The second tire retaining wall 208 is opposite and spaced apart from the first tire retaining wall 206. In one embodiment, the second tire retaining portion 202 also includes a second protrusion (e.g., a second tire retaining feature) (not shown). The second protrusion may extend away from the second tire retaining wall 208, towards the first tire retaining portion 200. The second protrusion may be any number of shapes including, for example, a shape having a cross-section that is rectangular with a semi-circle cap. The second protrusion may extend circumferentially around the rim 122. The first protrusion and the second protrusion may be other shapes.

The rim 122 may seat a tire 120 (see FIG. 2) that is, for example, a tubeless clincher tire. The tire 120 includes beads that interact with the radially outer tire engaging portion 130 (e.g., the first tire retaining portion 200 and the second tire retaining portion 202) of the rim 122 to attach the tire 120 to and maintain the tire 120 on the rim 122. The beads may include any number of materials within the beads, such as, for example, a steel wire or aramid (e.g., Kevlar^{™}) fiber, to prevent the tire 120 from moving off of the rim 122. Due to the reinforcement with the steel wire or the Kevlar^{™} fiber, for example, the beads resist stretching from internal air pressure. Alternatively, the beads may be made of a same material as the tire 120 (e.g., rubber).

The radially outer tire engaging portion 130 also includes a well 210 positioned between the first tire retaining portion 200 and the second tire retaining portion 202 of the rim 122. The well 210 provides a volume into which the beads of the tire 120 may be placed when the tire 120 is being attached to the rim 122. As the tire 120 is inflated, the beads of the tire 120 move away from each other until the beads interact with the first tire retaining portion 200 and the second tire retaining portion 202, respectively. When inflated, the beads of the tire 120 abut the first tire retaining wall 206 and the second tire retaining wall 208, respectively. In one embodiment, the first tire retaining feature and the second tire retaining feature, for example, keep the beads of the tire 120 positioned within the radially outer tire engaging portion 130 (e.g., keep the beads of the tire 120 engaged with the first tire retaining wall 206 and the second tire retaining wall 208) and thus keep the tire 120 from blowing off the rim 122. The contact between the beads and the first tire retaining wall 206 and the second tire retaining wall 208, respectively, forms a seal between the inflated tire 120 and the rim 122.

The radially outer tire engaging portion 130 may also include ridges (e.g., bead bumps; a first bead bump and a second bead bump) on opposite sides of the well 210, respectively. A first shelf 214 (e.g., a first bead shelf) extends away from the first tire retaining wall 206 (e.g., between the first tire retaining wall 206 and the first bead bump), and a second shelf 216 (e.g., a second bead shelf) extends away from the second tire retaining wall 208 (e.g., between the second tire retaining wall 208 and the second bead bump). In one embodiment, curved transition regions 218 extend between the first shelf 214 and the first tire retaining wall 206, and the second shelf 216 and the second tire retaining wall 208, respectively. The bead bumps may be positioned on opposite sides of the well 210, respectively, and may be raised relative to the first shelf 214 and the second shelf 216, respectively. The bead bumps may help retain the tire 120 on the rim 122 if the tire 120 loses pressure.

As shown in the embodiment of FIG. 3, first layers 150 may form the spoke receiving surface 132, an outer surface of the first sidewall 138, an outer surface of the second sidewall 204, and an outer surface of the radially outer tire engaging portion 130 (e.g., the first tire retaining portion 200, the second tire retaining portion 202, the well 210, the first shelf 214, the second shelf 216, and the curved transition regions 218). In other embodiments, first layers 150 form less than all of these outer surfaces of the rim 122.

For example, a first layer 150a may be positioned to form the spoke receiving surface 132 (e.g., spoke receiving first layer), a first layer 150b may overlap the spoke receiving first layer 150a and form the outer surface of the first sidewall 138 (e.g., first sidewall first layer), and a first layer 150c may overlap the spoke receiving first layer 150a and form the outer surface of the second sidewall 204 (e.g., second sidewall first layer). First layers 150d and 150e may overlap at the outer tire engaging portion 130 to form, for example, an outer surface of the first tire retaining wall 206, the second tire retaining wall 208, the well 210, the first shelf 214, the second shelf 216, and the curved transition regions 218 (e.g., tire engaging first layers).

Lengths of the first layers 150a-150e, respectively, may extend radially and/or circumferentially relative to the rim 122. In one embodiment, the lengths of the first layers 150a-150e, respectively, extend all the way around a circumference of the layup of the rim 122. In other words, the layup pattern of the rim 122 only includes one each of the first layers 150a-150e. In other embodiments, less than all of the first layers 150a-150e extend all the way around the circumference of the layup of the rim 122.

In another embodiment, at least some of the lengths of the first layers 150a-150e, respectively, extend less than all of the way around the circumference of the layup of the rim 122. For example, some or all of the lengths of the first layers 150a-150e, respectively, may extend one sixteenth, one eighth, one quarter, or halfway around the circumference of the layup of the rim 122. In other words, this part of the layup pattern may be repeated (e.g., with overlapping) around the rim 122. For example, the first sidewall first layers 150b may overlap adjacent first sidewall first layers 150b by 0.5 inch, and the second sidewall first layers 150c may overlap adjacent second sidewall first layers 150c by 0.5 inch. More or less overlapping may be provided. Other sized lengths of the first layers 150a-150e may be provided.

Thin first layers 150 forming outer surfaces of the rim 122 may allow for distribution of loads across more fibers and may allow for fiber directions to be tailored along specific load paths. The first layers 150 may also be more aesthetically pleasing compared to the second layers 152 due to the unidirectional nature of the first layers 150.

Second layers 152 may be included within the layup pattern to provide thickness and thus stiffness at a lower cost compared to only using the first layers 150 (e.g., thin, unidirectional layers). In one embodiment, the second layers 152 do not form any outer surfaces of the rim 122 (e.g., except for outermost portions of the first tire retaining wall 206 and the second tire retaining wall 208, respectively). For example, a second layer 152a partially forms the spoke engaging portion 136 (e.g., spoke engaging second layer) and abuts an inner surface of the spoke receiving first layer 150a.

A length of the second layer 152a may extend circumferentially relative to the rim 122. Alternatively or additionally, the length of the second layer 152a may extend radially relative to the rim 122. In one embodiment, the length of the second layer 152a extends all the way around a circumference of the layup of the rim 122. In other words, the layup pattern of the rim 122 only includes one second layer 152a.

In another embodiment, the length of the second layer 152a extends less than all of the way around the circumference of the layup of the rim 122. For example, the length of the second layer 152a may extend one sixteenth, one eighth, one quarter, or halfway around the circumference of the layup of the rim 122. In other words, the layup pattern may be repeated (e.g., with overlapping) for at least some of the layers 150, 152, 154 around the rim 122. More or fewer second layers 152a may be provided within the layup pattern.

Second layers 152b and 152c overlap each other (e.g., butterfly second layers) and partially form the spoke engaging portion 136, the first sidewall 138, and the second sidewall 204. The second layer 152b overlaps the butterfly second layer 152c, the spoke receiving first layer 150a, and the first sidewall first layer 150b. The second layer 152c overlaps the spoke engaging second layer 152a, the spoke receiving first layer 150a, and the second sidewall first layer 150c.

Lengths of the second layers 152b and 152c, respectively, may extend circumferentially relative to the rim 122. Alternatively or additionally, the lengths of the second layers 152b and 152c, respectively, may extend radially relative to the rim 122. In one embodiment, the lengths of the second layers 152b and 152c extend all the way around a circumference of the layup of the rim 122. In other words, this part of the layup pattern of the rim 122 only includes one each of the second layers 152b and 152c.

In another embodiment, the lengths of the second layers 152b and 152c, respectively, extend less than all of the way around the circumference of the layup of the rim 122. For example, the lengths of the second layers 152b and 152c, respectively, may extend one sixteenth, one eighth, one quarter, or halfway around the circumference of the layup of the rim 122. In other words, this part of the layup pattern may be repeated (e.g., with overlapping) around the rim 122. More or fewer second layers 152b and 152c may be provided within the layup pattern.

A second layer 152d (e.g., support second layer) partially forms the radially outer tire engaging portion 130 (e.g., an inner portion of the first shelf 214, the second shelf 216, and the well 210), the first sidewall 138, and the second sidewall 204. The support second layer 152d overlaps the butterfly second layers 152b and 152c on opposite ends of the tire engaging second layer 152d, respectively, and a first layer 150k (e.g., support first layer) disposed within the radially outer tire engaging portion 130.

Lengths of the second layer 152d and the first layer 150k, respectively, may extend circumferentially relative to the rim 122. Alternatively or additionally, the lengths of the second layer 152d and the first layer 150k, respectively, extend radially relative to the rim 122 and/or across the rim 122. In one embodiment, the lengths of the second layer 152d and the first layer 150k, respectively, extend all the way around a circumference of the layup of the rim 122. In other words, the layup pattern of the rim 122 only includes one each of the second layer 152d and the first layer 150k.

In another embodiment, the lengths of the second layer 152d and the first layer 150k, respectively, extend less than all of the way around the circumference of the layup of the rim 122. For example, the lengths of the second layer 152d and the first layer 150k, respectively, may extend one sixteenth, one eighth, one quarter, or halfway around the circumference of the layup of the rim 122. In other words, this part of the layup pattern may be repeated (e.g., with overlapping) around the rim 122. More or fewer second layers 152d and/or first layers 150k may be provided within the layup pattern.

Second layers 152e and 152f (e.g., tire engaging second layers) partially form the radially outer tire engaging portion 130 (e.g., an outer portion of the first shelf 214, the second shelf 216, and the well 210) and overlap each other at the well 210. The tire engaging second layers 152e and 152f may be interleaved with the tire engaging first layers 150d and 150e. For example, the tire engaging second layer 152e may abut the tire engaging first layer 150d, and the tire engaging second layer 152f may abut the tire engaging first layer 150e. Part of the tire engaging second layer 152e may be disposed between the tire engaging first layers 150d and 150e, and part of the tire engaging second layer 152f may be disposed between the tire engaging first layer 150e and the support first layer 150k.

Lengths of the second layers 152e and 152f, respectively, may extend circumferentially relative to the rim 122. Alternatively or additionally, the lengths of the second layers 152e and 152f, respectively, extend radially relative to the rim 122 and/or across the rim 122. In one embodiment, the lengths of the second layers 152e and 152f, respectively, extend all the way around a circumference of the layup of the rim 122. In other words, the layup pattern of the rim 122 only includes one each of the second layers 152e and 152f.

In another embodiment, the lengths of the second layers 152e and 152f, respectively, extend less than all of the way around the circumference of the layup of the rim 122. For example, the lengths of the second layers 152e and 152f, respectively, may extend one sixteenth, one eighth, one quarter, or halfway around the circumference of the layup of the rim 122. In other words, this part of the layup pattern may be repeated (e.g., with overlapping) around the rim 122. More or fewer second layers 152e and/or 152f may be provided within the layup pattern.

Second layers 152g and 152h (e.g., tire retaining second layers) partially form the first tire retaining portion 200 and the second tire retaining portion 202, respectively. The layup pattern may include any number of tire retaining second layers 152g and 152h. For example, the layup pattern may include a stack of tire retaining second layers 152g (e.g., two or more tire retaining second layers 152g) that partially form the first tire retaining portion 200, and a stack of tire retaining second layers 152h (e.g., two or more tire retaining second layers 152h) that partially form the second tire retaining portion 202. In one embodiment, the layup pattern only includes a single tire retaining second layer 152g and a single tire retaining second layer 152h. The tire retaining second layers 152g are disposed between the first sidewall first layer 150b and the tire engaging first layer 150e, and the tire retaining second layers 152h are disposed between the second sidewall first layer 150c and the tire engaging first layer 150d.

Lengths of the second layers 152g and 152h, respectively, may extend circumferentially relative to the rim 122. Alternatively or additionally, the lengths of the second layers 152g and 152h, respectively, may extend radially relative to the rim 122. In one embodiment, the lengths of the second layers 152g and 152h, respectively, extend all the way around a circumference of the layup of the rim 122. In other words, the layup pattern of the rim 122 only includes one each of the second layers 152g and 152h.

In another embodiment, the lengths of the second layers 152g and 152h, respectively, extend less than all of the way around the circumference of the layup of the rim 122. For example, the lengths of the second layers 152g and 152h, respectively, may extend one sixteenth, one eighth, one quarter, or halfway around the circumference of the layup of the rim 122. In other words, this part of the layup pattern may be repeated (e.g., with overlapping) around the rim 122. More or fewer second layers 152g and 152h may be provided within the layup pattern.

Second layers 152i and 152j (e.g., elbow second layers) partially form the first tire retaining portion 200 and the first shelf 214, and the second tire retaining portion 202 and the second shelf 216, respectively. The layup pattern may include any number of elbow second layers 152i and 152j. For example, the layup pattern may include a stack of elbow second layers 152i (e.g., two or more elbow second layers 152i) that partially form the first tire retaining portion 200 and the first shelf 214, and a stack of elbow second layers 152j (e.g., two or more elbow second layers 152j) that partially form the second tire retaining portion 202 and the second shelf 216. In one embodiment, the layup pattern only includes a single elbow second layer 152i and a single elbow second layer 152j.

The elbow second layers 152i are disposed between the first sidewall first layer 150b and the tire engaging first layers 150e, and the tire retaining second layers 152j are disposed between the second sidewall first layer 150c and the tire engaging first layers 150d. In one embodiment, the elbow second layers 152i are bent, such that a first part of the elbow second layers 152i is disposed between the tire retaining second layers 152g and the first sidewall first layer 150b, and a second part of the elbow second layers 152i is disposed between the tire engaging second layer 152f and the support first layer 150k. Correspondingly, the elbow second layers 152j may be bent, such that a first part of the elbow second layers 152j is disposed between the tire retaining second layers 152h and the second sidewall first layer 150c, and a second part of the elbow second layers 152j is disposed between the tire engaging second layer 152e and the support first layer 150k.

Lengths of the second layers 152i and 152j, respectively, may extend circumferentially relative to the rim 122. Alternatively or additionally, the lengths of the second layers 152i and 152j, respectively, may extend radially relative to the rim 122 and/or across the rim 122. In one embodiment, the lengths of the second layers 152i and 152j extend all the way around a circumference of the layup pattern of the rim 122. In other words, the layup pattern of the rim 122 only includes one each of the second layers 152i and 152j.

In another embodiment, the lengths of the second layers 152i and 152j, respectively, extend less than all of the way around the circumference of the layup of the rim 122. For example, the lengths of the second layers 152i and 152j, respectively, may extend one sixteenth, one eighth, one quarter, or halfway around the circumference of the layup of the rim 122. In other words, this part of the layup pattern may be repeated (e.g., with overlapping) around the rim 122. More or fewer second layers 152i and 152j may be provided within the layup pattern.

Third layers 154 may be included within the layup pattern to provide stiffness and strength at particular locations on the rim 122. For example, third layers 154 may be included in the layup at the spoke engaging portion 136. In other embodiments, third layers 154 may additionally or alternatively be provided at different locations on the rim 122 (e.g., within the well 210). Referring to the embodiment shown in FIG. 3, the layup pattern includes a third layer 154a (e.g., a support third layer) that forms an inner surface of the spoke engaging portion 136. The third layer 154a abuts one of the butterfly second layers 152b and 152c (e.g., the butterfly second layer 152b).

A length of the third layer 154a may extend circumferentially relative to the rim 122. Alternatively or additionally, the length of the third layer 154a may extend radially relative to the rim 122. In one embodiment, the length of the third layer 154a extends all the way around a circumference of the layup of the rim 122. In other words, the layup pattern of the rim 122 only includes one third layer 152a.

In another embodiment, the length of the third layer 154a extends less than all of the way around the circumference of the layup of the rim 122. For example, the length of the third layer 154a may extend one sixteenth, one eighth, one quarter, or halfway around the circumference of the layup of the rim 122. In other words, this part of the layup pattern may be repeated (e.g., with overlapping) around the rim 122. The layup pattern of the rim 122 may thus include, for example, sixteen, eight, four, or two third layers 154a. More or fewer second layers 152a may be provided within the layup pattern.

Other layup patterns may be provided. For example, the layup pattern may include more or fewer types of layers. In one embodiment, the layup pattern only includes first layers 150 or second layers 152. In another embodiment, the layup pattern includes two types of layers of the first layers 150, the second layers 152, and the third layers 154. For example, the layup pattern includes only first layers 150 and third layers 154, or only second layers 152 and third layers 154. Additional types of layers may be provided. For example, the layup pattern may include layers made of fiberglass in place of or in addition to the third layers 154.

Other numbers, shapes, sizes, and orientations of layers than what is shown in FIG. 3 may be provided. For example, the layup pattern may include more butterfly second layers 152b and 152c, more support second layers 152d to form a stack of support second layers 152d, more tire engaging second layers 152e and 152f, more tire retaining second layers 152g and 152h within the respective stacks, more elbow second layers 152i and 152j within the respective stacks, or any combination thereof. As another example, the layup pattern may include more support first layers 150k. As yet another example, the layup pattern may not include any support second layers 152d. Other configurations of the layup pattern may be provided.

The layup pattern for the first sidewall 138 and the second sidewall 204 of the rim 122 prior to the curing process, for example, is circular in shape, and the layup pattern of the rim 122 has any number of cross sections (e.g., as shown in FIG. 3). The first layers 150, the second layers 152, the third layers 154, additional layers of material (e.g., composite material), or any combination thereof are arranged around a center between an inner circumference of the layup pattern defined by a first radius and an outer circumference of the layup pattern defined by a second radius. The inner circumference and the outer circumference of the layup pattern may, for example, define the inner circumference 134 of the rim 122 and the outer circumference 135 of the rim 122, respectively. The layup pattern may include any number of layers 150, 152, 154, for example. The number of first layers 150, second layers 152, and third layers 154, for example, depends on a size and/or a shape of the respective layers 150, 152, 154, and/or a size of the rim 122.

The layup pattern for the first sidewall 138 may be the same as the layup pattern for the second sidewall 204. Alternatively, the layup pattern for the first sidewall 138 may be different than the layup pattern for the second sidewall 204. The different layup patterns for the first sidewall 138 and the second sidewall 204, respectively, may be due to axial geometry from cassette clearance. For example, spokes 124 on one side of the wheel 54, 56 may be in higher tension and/or may approach the spoke engaging portion 136 of the rim 122 at different angles, respectively, than spokes 124 on the other side of the wheel 54, 56. In one embodiment, at least some of the layers of the first sidewall 138 are of a different material than at least some of the layers of the second sidewall 204. Other combinations of layup patterns may be provided for the first sidewall 138 and the second sidewall 204, respectively.

The layup pattern for the first sidewall 138 and the second sidewall 204 of the rim 122 of the front wheel 54 may be the same as the layup pattern for the first sidewall 138 and the second sidewall 204 of the rim 122 of the rear wheel 56. Alternatively, the layup patterns for the front wheel 54 and the rear wheel 56, respectively, may be different.

The layup pattern for the first sidewall 138 and/or the second sidewall 204 of the front wheel 54 and/or the rear wheel 56 may be optimized for specific applications. For example, positioning of, for example, carbon composite layers (e.g., the third layers 154) within a layup for a respective sidewall of a rim may be based on whether the sidewall is included in a front wheel or a rear wheel, whether the rim is subjected to wheel braking or rim braking, and/or whether the wheel is constructed using tangential lacing or radial lacing. The layup pattern may be optimized for additional and/or different applications.

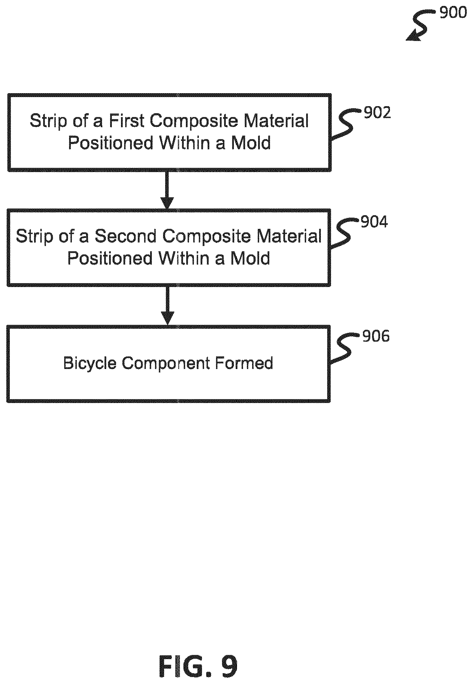

FIG. 9 illustrates a method 900 for manufacturing a bicycle component (e.g., the rim 122) of a bicycle (e.g., the bicycle 50). The acts of the method 900 presented below are intended to be illustrative. In some embodiments, the method 900 may be accomplished with one or more additional acts not described, and/or without one or more of the acts discussed. Additionally, the order in which the acts of the method 900 are illustrated in FIG. 9 and described below is not intended to be limiting.

In act 902, at least one layer of a first composite material is positioned within a mold. The first composite material includes a matrix of a first polymer-based material and natural fibers of a first reinforcing material. In one embodiment, fiber orientation of the natural fibers of the first reinforcing material of the layer of the first composite material is unidirectional in a direction along a length of the respective layer. The layer of the first composite material may be any number of shapes and/or sizes. For example, the layer of the first composite material may be rectangular in shape and may have a length at least as tall as a sidewall of a rim to be manufactured. Other shapes and/or sizes may be provided.

The first polymer-based material may be or include any number of polymer-based materials including, for example, a thermoplastic, a thermoset matrix, or a combination thereof. The fibers of the first reinforcing material may be or include any number of different types of natural fibers including, for example, flax fibers, kenaf fibers, hemp fibers, jute fibers, sisal fibers, or any combination thereof. Other polymer-based materials and/or other reinforcing materials may be used for the first composite material.

In act 904, at least one layer of a second composite material is positioned within the mold, such that the layer of the second composite material abuts the layer of the first composite material. The second composite material includes a matrix of a second polymer-based material and natural fibers of a second reinforcing material. In one embodiment, the second reinforcing material is woven within the matrix of the second polymer-based material. The layer of the second composite material may be any number of shapes and/or sizes. For example, the layer of the second composite material may be rectangular in shape and may have a length at least as tall as a sidewall of a rim to be manufactured. Other shapes and/or sizes may be provided. In one embodiment, the layer of the second composite material is thicker than the layer of the first composite material.

The second polymer-based material may be or include any number of polymer-based materials including, for example, a thermoplastic, a thermoset matrix, or a combination thereof. The fibers of the second reinforcing material may be or include any number of different types of natural fibers including, for example, flax fibers, kenaf fibers, hemp fibers, jute fibers, sisal fibers, or any combination thereof. Other polymer-based materials and/or other reinforcing materials may be used for the second composite material.

In other embodiments, additional, fewer, and/or different layers of composite material may be positioned within the mold. For example, a layer of a third composite material may be positioned within the mold, such that the layer of the second composite material is disposed between the layer of the third composite material and the layer of the first composite material.

The third composite material includes a matrix of a third polymer-based material and natural fibers of a third reinforcing material. The third polymer-based material may be or include any number of polymer-based materials including, for example, a plastic, an acrylic, a resin, an epoxy, or any combination thereof. The fibers of the third reinforcing material may be or include any number of different types of fibers including, for example, carbon fibers. Other polymer-based materials and/or other reinforcing materials may be used for the third composite material.

As another example, the method 900 does not include the act 904, and the act 902 is repeated a number of times. In other words, only layers of first composite material are positioned within the mold. Alternatively, the method 900 does not include the act 902, and the act 904 is repeated a number of times. In other words, only layers of the second composite material are positioned within the mold. Other combinations of layers may be provided.

Acts 902 and 904 may be repeated any number of times to form a layup pattern for the bicycle component. When the acts 902 and 904 are repeated, each layer of the second composite material does not have to abut a layer of the first composite material (e.g., the tire retaining second layers 152g and 152h). In one embodiment, acts 902 and 904 may be repeated any number of times to create the layup pattern shown in FIG. 3 or another layup pattern. In one embodiment, acts 902 and 904 may be repeated with one or more additional acts, in which one or more layers of other composite materials (e.g., the third composite material) are positioned any number of times to, for example, form a layup pattern (e.g., the layup pattern shown in FIG. 3).

For example, layers of the first composite material may be positioned within the mold (act 902) first, such that the layers of the first composite material abut one or more surfaces of the mold. The layers of the first composite material abutting the one or more surfaces of the mold ultimately form one or more outer surfaces (e.g., an outer surface) of a composite laminate of the bicycle component formed with the method 900. For example, the layers of the first composite material may at least partially form a spoke receiving surface (e.g., the spoke receiving surface 132), an outer surface of a first sidewall (e.g., the first sidewall 138), an outer surface of a second sidewall (e.g., the second sidewall 204), and an outer surface of a radially outer tire engaging portion (e.g., the radially outer tire engaging portion 130).

Layers of the first composite material may be positioned within the mold to overlap with one or more other layers of the first composite material. For example, as illustrated in the example of FIG. 3, a layer of the first composite material partially forming the first sidewall and a layer of the first composite material partially forming the second sidewall may respectively overlap a layer of the first composite material partially forming the spoke receiving surface. Other overlapping may be provided. For example, layers of the first composite material may be positioned around the layup, such that portions of adjacent layers of the first composite material (e.g., in the circumferential direction) overlap each other.

Layers of the second composite material may be positioned within the mold (e.g., act 904) after the layers of the first composite material are positioned within the mold in act 902. Accordingly, the layers of the second composite material may be separated from the one or more surfaces of the mold by at least the layers of the first composite material (e.g., in act 902). The layers of the second composite material ultimately form thickness and/or inner surfaces of the composite laminate of the bicycle component formed with the method 900. The layers of the second composite material may thus be further from the outer surface of the composite laminate than at least some of the layers of the first composite material. In one embodiment, one or more layers of the second composite material may be positioned within the mold between positionings of layers of the first composite material (e.g., as shown in FIG. 3, with the tire engaging second layers 152e and 152f being interleaved with the tire engaging first layers 150d and 150e).

Layers of the second composite material may be positioned within the mold to overlap with one or more other layers of the second composite material. For example, as illustrated in the example of FIG. 3, a layer of the second composite material partially forming the first sidewall and a layer of the second composite material partially forming the second sidewall may overlap each other and may overlap a layer of the second composite material partially forming the radially outer tire engaging portion. Other overlapping may be provided. For example, layers of the second composite material may be positioned around the layup, such that portions of adjacent layers of the second composite material (e.g., in the circumferential direction) overlap each other.

In one embodiment, layers of the third composite material may be positioned within the mold after the layers of the second composite material are positioned within the mold in act 904. Accordingly, the layers of the third composite material may be separated from the one or more surfaces of the mold by at least layers of the first composite material (e.g., in act 902) and/or layers of the second composite material (e.g., in act 904). The layers of the third composite material may provide strength and stiffness and ultimately form one or more inner surfaces of the composite laminate of the bicycle component formed with the method 900. The layers of the third composite material may thus be further from the outer surface of the composite laminate than at least some of the layers of the first composite material and layers of the second composite material.

Layers of the third composite material may be positioned within the mold to overlap with one or more other layers of the third composite material. For example, layers of the third composite material may be positioned around the layup, such that portions of adjacent layers of the third composite material (e.g., in the circumferential direction) overlap each other.

In act 906, the bicycle component is formed. Forming the bicycle component includes forming a composite laminate (e.g., lamination) that includes at least the layer of the first composite material and the layer of the second composite material within the mold. In one embodiment, forming the bicycle component includes forming the composite laminate that includes at least the layer of the first composite material, the layer of the second composite material, and the layer of the third composite material within the mold.

Any number of compositions of the composite laminate may be provided. For example, the first composite material and the second composite material may make up at least 5% of the composite laminate by volume. For example, in one embodiment, the composite laminate may be 95% a carbon composite by volume and 5% the first composite material by volume. In another embodiment, the composite laminate may be 95% the first composite material and/or the second composite material by volume and 5% a carbon composite by volume. In yet another embodiment, the first composite material and/or the second composite material make up 100% of the composite laminate by volume.

In one embodiment, the layup pattern for a rim may include layers of the third composite material (e.g., a carbon fiber composite) to form, for example, a first sidewall, a second sidewall, a spoke engaging portion, and part of a tire engaging portion; layers of the first composite material and/or layers of the second composite material may be positioned within tire retaining portions of the tire engaging portion (e.g., the first tire retaining portion 200 and the second tire retaining portion 202) to provide thickness (e.g., act as the tire retaining second layers 152g and 152h and/or the elbow second layers 152i and 152j), and thus stiffness, using a lower density material. In other words, the layers of the first composite material and/or the layers of the second composite material may act as a lower density filler.

The mold may be used to form all or part of the bicycle component. For example, for a rim, the mold may be broken up into multiple parts to allow access to the mold when positioning at least the layer of the first material in act 902 and the layer of the second material in act 904. For example, the mold may be broken up into multiple circumferential portions (e.g., four circumferential portions) and/or multiple pieces (e.g., a first sidewall piece, a second sidewall piece, and a radially outer piece).

Forming the composite laminate may include shaping and curing the composite laminate within, for example, the mold. For example, at least the layer of the first composite material and the layer of the second composite material may be positioned within the mold and shaped using a bladder inflated within the mold. The composite laminate may be shaped in other ways.

Once shaped, the composite laminate may be cured in any number of ways including, for example, by press curing, autoclave curing, or oven curing the composite laminate that includes at least the layer of the first composite material and the layer of the second composite material. Other types of curing may be used.

The method 900 may be used to manufacture any number of different bicycle components. For example, in addition to bicycle rims, the method 900 may be used to manufacture crankarms, handlebars, stems, seat posts, seat rails, shifting levers, brake levers, derailleur cages, suspension fork components, and/or other bicycle components.

After act 906, a volume of a respective one of the natural fibers of the first reinforcing material is less than the volume of the respective one natural fiber of the first reinforcing material before the forming of the composite laminate in act 906. Accordingly, the formed composite laminate may include at least one or more compressed layers of the first composite material, one or more compressed layers of the second composite material, and one or more layers of the third composite material. In other embodiments, the formed composite laminate may include more, fewer, and/or different compressed layers of composite materials.

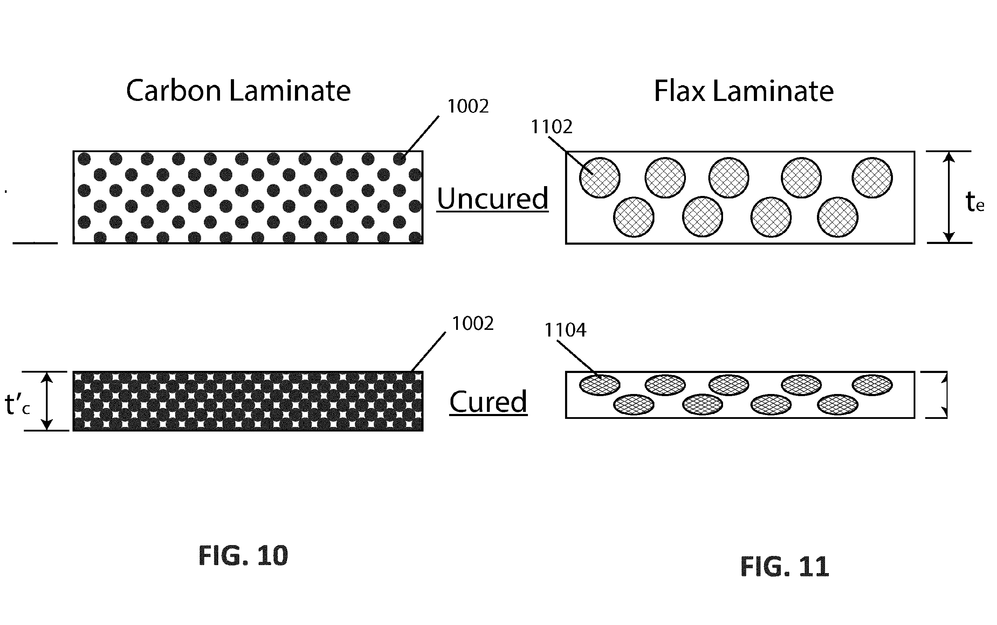

Referring to FIG. 10, a thickness of, for example, a carbon laminate (e.g., including only the third composite material) changes very little after curing. As illustrated in FIG. 10, diameters of carbon filaments 1002 of the carbon laminate after curing remain consistent and uncompacted. Referring to FIG. 11, a thickness of a natural fiber laminate (e.g., a flax laminate; including only the first composite material) changes more after curing compared to the carbon laminate illustrated in FIG. 10. Lumen cores 1102 of the natural fibers of the natural fiber laminate (e.g., flax laminate) compress under pressure, which allows the natural fibers to collapse creating collapsed lumen cores 1104. In other words, a volume of a respective one of the natural fibers of the natural fiber laminate is greater before curing (e.g., lamination) of the natural fiber laminate compared to the volume of the respective one natural fiber after the lamination of the composite laminate. Accordingly, a change in thickness of the flax laminate Δt_{f} after curing is much greater than a change in thickness of the carbon laminate Δt_{c} after curing.

The number of layers of composite material (e.g., the first composite material, the second composite material, and the third composite material) may vary across the formed part. For example, a first part of the radially outer tire engaging portion (e.g., the first tire retaining wall 206) may include more layers of the second composite material than a second part of the radially outer tire engaging portion (e.g., the well 210). Further, a spoke engaging portion (e.g., the spoke engaging portion 136) may include more composite layers (e.g., of the first composite material, the second composite material, and the third composite material) than the number of composite layers included within the first sidewall or the second sidewall (e.g., of the first composite material and the second composite material). Other differences in number of layers and/or thickness may be provided (see FIG. 3).

Due to the varying number of layers of composite material across the formed part, changes in thickness before and after curing, for example, may also vary. The layup of the layers of composite material (e.g., see FIG. 3) may account for the change in thickness after curing. In other words, the uncompacted layup is made thicker to account for such change. In one embodiment, the compressed thickness of the composite laminate is 75% or less of an original thickness of the uncompacted layup. The composite laminate may be 75% or less of the original thickness across the entire formed bicycle component (e.g., the first sidewall, the second sidewall, the radially outer tire engaging portion, and the spoke engaging portion), or this change in thickness may only apply to certain portions of the bicycle component (e.g., the first sidewall and the second sidewall). For example, the thickness of the layup of part of a first sidewall of a bicycle rim may be 5 mm, and the thickness of the first sidewall of the bicycle rim after curing may be 3 mm.

In an embodiment, a layer of material or exterior plies that are environmentally stable may be added to the outside and/or outermost layer of the laminate. This layer or material may behave as a moisture barrier since natural fibers may be hygroscopic.

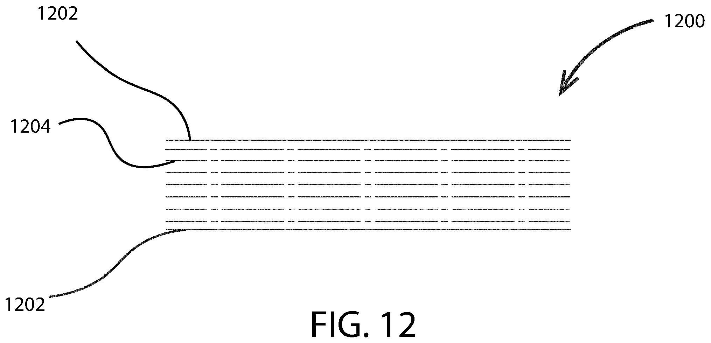

An example of this can be seen in FIG. 12, showing a laminate 1200 having layers of material that form a section of a bicycle rim, shifter hood, or any other part of a bicycle. The laminate 1200 includes barrier layers 1202. In the present embodiment, there are two moisture barrier layers 1202 (at the top and bottom of the laminate 1200) made of a moisture barrier material. Between the moisture barrier layers 1202 are any number of natural fiber layers 1204. The moisture barrier layers 1202 may be thin layers of fiberglass, polyester fiber, carbon or any other hydrophilic material. This material is covered with epoxy resin and behaves as a carrier for the epoxy resin during curing, holding the resin on the surface of the laminate 1200 so that the resin can become a molded surface protectant. Without the moisture barrier layer 1202, the resin may seep into the natural fiber layers 1204 during curing.

The moisture barrier layers 1202 may be added as a separate last layer in the process of creating the laminate 1200. Alternatively, the moisture barrier material may be added directly to the last layer of the natural fiber material, creating the moisture barrier layer 1202.

The moisture barrier layer 1202 may be a woven material, nonwoven material, or in any other format that accepts resin. During curing, the moisture barrier layer 1202 holds the resin in place on the surface of the bicycle component.

The moisture barrier layer 1202 may be used on any bicycle component made of natural fiber. The moisture barrier layer 1202 may be used on all internal and external surfaces, or any surface that may be exposed to moisture.

The illustrations of the embodiments described herein are intended to provide a general understanding of the structure of the various embodiments. The illustrations are not intended to serve as a complete description of all of the elements and features of apparatus and systems that utilize the structures or methods described herein. Many other embodiments may be apparent to those of skill in the art upon reviewing the disclosure. Additionally, the illustrations are merely representational and may not be drawn to scale. Certain proportions within the illustrations may be exaggerated, while other proportions may be minimized. Accordingly, the disclosure and the figures are to be regarded as illustrative rather than restrictive.

While this specification contains many specifics, these should not be construed as limitations on the scope of the invention or of what may be claimed, but rather as descriptions of features specific to particular embodiments of the invention. Certain features that are described in this specification in the context of separate embodiments can also be implemented in combination in a single embodiment. Conversely, various features that are described in the context of a single embodiment can also be implemented in multiple embodiments separately or in any suitable sub-combination.

Similarly, while operations and/or acts are depicted in the drawings and described herein in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that any described program components and systems can generally be integrated together in a single software product or packaged into multiple software products.

Combinations of the above embodiments, and other embodiments not specifically described herein, are apparent to those of skill in the art upon reviewing the description.

In addition, in the foregoing Detailed Description, various features may be grouped together or described in a single embodiment for the purpose of streamlining the disclosure. This disclosure is not to be interpreted as reflecting an intention that the claimed embodiments require more features than are expressly recited in each claim. Rather, as the following claims reflect, inventive subject matter may be directed to less than all of the features of any of the disclosed embodiments.

It is intended that the foregoing detailed description be regarded as illustrative rather than limiting and that it is understood that the following claims are intended to define the scope of the invention. The claims should not be read as limited to the described order or elements unless stated to that effect.

## Claims

1. A rim (122) for a bicycle wheel, the rim (122) comprising:
a radially inner portion disposed along an inner circumference (134) of the rim (122);
a first sidewall (138);
a second sidewall (204) spaced apart from the first sidewall (138), wherein the first sidewall (138) and the second sidewall (204) extend radially outward from the radially inner portion; and
a radially outer tire engaging portion (130) disposed along an outer circumference (135) of the rim (122), the radially outer tire engaging portion (130) extending from the first sidewall (138) and the second sidewall (204), respectively,
wherein the first sidewall (138), the second sidewall (204), the radially outer tire engaging portion (130), the radially inner portion, or any combination thereof includes a composite laminate,
**characterized in that** the composite laminate includes one or more layers of a composite material, the composite material including a matrix of a polymer-based material and natural fibers for a reinforcing material; wherein the composite material is a first composite material, the polymer-based material is a first polymer-based material, and the reinforcing material is a first reinforcing material;
wherein the composite laminate includes one or more layers of a second composite material, the second composite material including a matrix of a second polymer-based material and natural fibers of a second reinforcing material; and
wherein the composite laminate includes one or more layers of a third composite material, the third composite material including a matrix of a third polymer-based material and fibers of a third reinforcing material, wherein the fibers of the third reinforcing material are carbon fibers.

2. The rim (122) of claim 1, wherein the reinforcing material has a specific modulus between 24 and 60 GPa/(g/cm³) and a specific strength below 600 MPa/(g/cm³).

3. The rim (122) of claim 1 or 2, wherein the reinforcing material has a cellulose content above 40% and a hemicellulose content above 4%

4. The rim (122) of any of the preceding claims, wherein the one or more layers of the composite material include strips of the composite material.

5. The rim (122) of claim 4, wherein fiber orientation of the natural fibers of the respective strip is unidirectional in a direction along a length of the respective strip.

6. The rim (122) of any of the preceding claims, wherein the one or more layers of the first composite material are closer to a surface of the composite laminate than the one or more layers of the second composite material are relative to the surface of the composite laminate.

7. The rim of any of the preceding claims, wherein the third polymer-based material is a plastic, an acrylic, a resin, an epoxy, or any combination thereof.

8. The rim (122) of any of the preceding claims, wherein the one or more layers of the second composite material are closer to the surface of the composite laminate than the one or more layers of the third composite material are relative to the surface of the composite laminate.

9. The rim (122) of any of the preceding claims, wherein the second reinforcing material is woven within the second polymer-based material.

10. The rim (122) of any of the preceding claims, wherein the second reinforcing material is the same as the first reinforcing material.

11. The rim (122) of any of the preceding claims, wherein the second composite material is the same as the first composite material.

12. The rim (122) of any of the preceding claims, wherein the one or more layers of a composite material are one or more compressed layers, wherein preferably the one or more compressed layers are compressed due to curing in a curing process relative to an original thickness before curing.

13. The rim (122) of claim 12, wherein the compressed thickness is 75 percent or less of the original thickness of the one or more compressed layers of the composite material of the composite laminate.

## Patentansprüche

1. Felge (122) für ein Fahrradrad, die Felge (122) umfassend:
einen radial innenliegenden Abschnitt, der entlang eines Innenumfangs (134) der Felge (122) angeordnet ist;
eine erste Seitenwand (138);
eine zweite Seitenwand (204), die von der ersten Seitenwand (138) beabstandet ist, wobei sich die erste Seitenwand (138) und die zweite Seitenwand (204) von dem radial innenliegenden Abschnitt radial nach außen erstrecken; und
einen radial außenliegenden Reifeneingriffsabschnitt (130), der entlang eines Außenumfangs (135) der Felge (122) angeordnet ist, wobei sich der radial außenliegende Reifeneingriffsabschnitt (130) von der ersten Seitenwand (138) bzw. der zweiten Seitenwand (204) erstreckt,
wobei die erste Seitenwand (138), die zweite Seitenwand (204), der radial außenliegende Reifeneingriffsabschnitt (130), der radial innenliegende Abschnitt oder eine beliebige Kombination davon ein Verbundlaminat umfassen, **dadurch gekennzeichnet, dass** das Verbundlaminat eine oder mehrere Schichten eines Verbundwerkstoffs umfasst, der Verbundwerkstoff eine Matrix eines Materials auf Polymerbasis und Naturfasern als Verstärkungsmaterial umfasst; wobei der Verbundwerkstoff ein erster Verbundwerkstoff ist, das Material auf Polymerbasis ein erstes Material auf Polymerbasis ist und das Verstärkungsmaterial ein erstes Verstärkungsmaterial ist;
wobei das Verbundlaminat eine oder mehrere Schichten eines zweiten Verbundwerkstoffs umfasst, wobei der zweite Verbundwerkstoff eine Matrix eines zweiten Materials auf Polymerbasis und Naturfasern eines zweiten Verstärkungsmaterials umfasst; und
wobei das Verbundlaminat eine oder mehrere Schichten eines dritten Verbundwerkstoffs umfasst, wobei der dritte Verbundwerkstoff eine Matrix aus einem dritten Material auf Polymerbasis und Fasern eines dritten Verstärkungsmaterials umfasst, wobei die Fasern des dritten Verstärkungsmaterials Carbonfasern sind.

2. Felge (122) nach Anspruch 1, wobei das Verstärkungsmaterial einen spezifischen Betrag zwischen 24 und 60 GPa/(g/cm³) und eine spezifische Stärke unter 600 MPa/(g/cm³) aufweist.

3. Felge (122) nach Anspruch 1 oder 2, wobei das Verstärkungsmaterial einen Zellulosegehalt von über 40% und einen Hemizellulosegehalt von über 4% aufweist.

4. Felge (122) nach einem der vorangehenden Ansprüche, wobei eine oder mehrere Schichten des Verbundwerkstoffs Streifen des Verbundwerkstoffs enthalten.

5. Felge (122) nach Anspruch 4, wobei die Faserausrichtung der Naturfasern des jeweiligen Streifens unidirektional in eine Richtung entlang einer Länge des jeweiligen Streifens ausgerichtet ist.

6. Felge (122) nach einem der vorangehenden Ansprüche, wobei sich eine oder mehrere Schichten des ersten Verbundwerkstoffs näher an der Oberfläche des Verbundlaminats befinden als eine oder mehrere Schichten des zweiten Verbundwerkstoffs relativ zur Oberfläche des Verbundlaminats.

7. Felge nach einem der vorangehenden Ansprüche, wobei das dritte Material auf Polymerbasis ein Kunststoff, ein Acryl, ein Harz, ein Epoxidharz oder eine beliebige Kombination davon ist.

8. Felge (122) nach einem der vorangehenden Ansprüche, wobei sich eine oder mehrere Schichten des zweiten Verbundwerkstoffs näher an der Oberfläche des Verbundlaminats befinden als eine oder mehrere Schichten des dritten Verbundwerkstoffs relativ zur Oberfläche des Verbundlaminats.

9. Felge (122) nach einem der vorangehenden Ansprüche, wobei das zweite Verstärkungsmaterial in das zweite Material auf Polymerbasis eingewoben ist.

10. Felge (122) nach einem der vorangehenden Ansprüche, wobei das zweite Verstärkungsmaterial dasselbe wie das erste Verstärkungsmaterial ist.

11. Felge (122) nach einem der vorangehenden Ansprüche, wobei der zweite Verbundwerkstoff derselbe wie der erste Verbundwerkstoff ist.

12. Felge (122) nach einem der vorangehenden Ansprüche, wobei eine oder mehrere Schichten eines Verbundwerkstoffs eine oder mehrere komprimierte Schichten sind, wobei vorzugsweise eine oder mehrere komprimierte Schichten aufgrund des Aushärtens in einem Aushärtungsprozess relativ zu einer ursprünglichen Dicke vor dem Aushärten komprimiert werden.

13. Felge (122) nach Anspruch 12, wobei die komprimierte Dicke 75% oder weniger der ursprünglichen Dicke einer oder mehrerer komprimierter Schichten des Verbundwerkstoffs des Verbundlaminats beträgt.

## Revendications

1. Jante (122) pour roue de bicyclette, la jante (122) comprenant :
une partie radialement intérieure disposée le long de la circonférence intérieure (134) de la jante (122) ;
un premier flanc (138) ;
un second flanc (204) espacé du premier flanc (138), le premier flanc (138) et le second flanc (204) s'étendant radialement vers l'extérieur à partir de la partie radialement intérieure ; et
une partie d'engagement de pneu radialement extérieure (130) disposée le long d'une circonférence extérieure (135) de la jante (122), la partie d'engagement de pneu radialement extérieure (130) s'étendant respectivement, à partir du premier flanc (138) et du second flanc (204),
dans laquelle le premier flanc (138), le second flanc (204), la partie d'engagement de pneu radialement extérieure (130), la partie radialement intérieure, ou toute combinaison de ceux-ci comprend un stratifié composite,
**caractérisé en ce que** le stratifié composite comprend une ou plusieurs couches d'un matériau composite, le matériau composite comprenant une matrice d'un matériau à base de polymère et des fibres naturelles servant de matériau de renforcement ; dans lequel le matériau composite est un premier matériau composite, le matériau à base de polymère est un premier matériau à base de polymère et le matériau de renforcement est un premier matériau de renforcement ;
dans laquelle le stratifié composite comprend une ou plusieurs couches d'un deuxième matériau composite, le deuxième matériau composite comprenant une matrice d'un deuxième matériau à base de polymère et des fibres naturelles d'un deuxième matériau de renforcement ; et
dans laquelle le stratifié composite comprend une ou plusieurs couches d'un troisième matériau composite, le troisième matériau composite comprenant une matrice d'un troisième matériau à base de polymère et des fibres d'un troisième matériau de renforcement, dans lequel les fibres du troisième matériau de renforcement sont des fibres de carbone.

2. Jante (122) selon la revendication 1, dans laquelle le matériau de renforcement présente un module spécifique compris entre 24 et 60 GPa/(g/cm³) et une résistance spécifique inférieure à 600 MPa/(g/cm³).

3. Jante (122) selon la revendication 1 ou 2, dans laquelle le matériau de renforcement présente une teneur en cellulose supérieure à 40 % et une teneur en hémi-cellulose supérieure à 4 %.

4. Jante (122) selon l'une quelconque des revendications précédentes, dans laquelle lesdites une ou plusieurs couches du matériau composite comprennent des bandes du matériau composite.

5. Jante (122) selon la revendication 4, dans laquelle l'orientation des fibres naturelles de la bande respective est unidirectionnelle dans une direction le long d'une longueur de la bande respective.

6. Jante (122) selon l'une quelconque des revendications précédentes, dans laquelle lesdites une ou plusieurs couches du premier matériau composite sont plus proches d'une surface du stratifié composite que lesdites une ou plusieurs couches du deuxième matériau composite ne le sont par rapport à la surface du stratifié composite.

7. Jante selon l'une quelconque des revendications précédentes, dans laquelle le troisième matériau à base de polymère est un plastique, un acrylique, une résine, un époxy ou toute combinaison de ceux-ci.

8. Jante (122) selon l'une quelconque des revendications précédentes, dans laquelle lesdites une ou plusieurs couches du deuxième matériau composite sont plus proches de la surface du stratifié composite que lesdites une ou plusieurs couches du troisième matériau composite ne le sont par rapport à la surface du stratifié composite.

9. Jante (122) selon l'une quelconque des revendications précédentes, dans laquelle le deuxième matériau de renforcement est tissé à l'intérieur du deuxième matériau à base de polymère.

10. Jante (122) selon l'une quelconque des revendications précédentes, dans laquelle le deuxième matériau de renforcement est identique au premier matériau de renforcement.

11. Jante (122) selon l'une quelconque des revendications précédentes, dans laquelle le deuxième matériau composite est identique au premier matériau composite.

12. Jante (122) selon l'une quelconque des revendications précédentes, dans laquelle lesdites une ou plusieurs couches d'un matériau composite sont une ou plusieurs couches comprimées, dans laquelle de préférence lesdites une ou plusieurs couches comprimées sont comprimées en raison du durcissement lors d'un processus de durcissement par rapport à une épaisseur d'origine avant le durcissement.

13. Jante (122) selon la revendication 12, dans laquelle l'épaisseur comprimée est égale à 75 pour cent ou moins de l'épaisseur d'origine desdites une ou plusieurs couches comprimées du matériau composite du stratifié composite.
